# DEMANDE DE BREVET EUROPEEN

(11) **EP 1 004 472 A1**
(43) Date de publication de la demande: **31.05.2000**
(21) Numéro de dépôt: 99402955.1
(22) Date de dépôt: 26.11.1999
(51) Int. Cl.: B60P 1/60

(54) **Unité de déchargement de citerne mobile pour produits pulverulents ou granulaires**

(30) Priorité: 27.11.1998 FR 9814980
(71) Demandeur: Dinovrac S.A, 64360 Monein (FR)
(72) Inventeur: Merceron, Jean-Jacques, 86220 Vaux S/Vienne (FR)
(74) Mandataire: Keib, Gérard

(57) **Abrégé**

L'invention concerne une unité de déchargement de citerne mobile pour produits pulvérulents ou granulaires, comprenant une trappe d'écoulement (16) en forme de cône renversé dont la base est raccordée à un orifice dans l'enveloppe (20) de la citerne (5) et le sommet est raccordé à un conduit de vidange (15), et comprenant un clapet diffuseur d'air pressurisé (17).

Le clapet diffuseur (17) est monté mobile dans un orifice (47) de ladite trappe. La trappe (16) peut en outre être mobile par rapport à l'enveloppe d'une position d'utilisation à une position de maintenance. Elle est munie de moyens pour la réception et le raccordement d'un cône d'écoulement (13) lorsqu'elle est en position de maintenance et de moyens de verrouillage dans la position d'utilisation.

Application aux remorques routières.

## Description

La présente invention concerne une unité de déchargement de citerne mobile pour produits pulvérulents ou granulaires, et plus particulièrement une telle unité du type comprenant une trappe d'écoulement en forme de cône renversé dont la base est raccordée à un orifice dans l'enveloppe de la citerne et le sommet est raccordé à un conduit de vidange, et comprenant un clapet diffuseur d'air pressurisé.

L'utilisation de clapets diffuseurs est connue sur des citernes routières ou ferroviaires pour provoquer une accélération du produit en cours de déchargement à l'entrée du conduit de vidange, et améliorer ainsi l'écoulement.

Un problème important qui se pose est toutefois celui du nettoyage, en particulier au niveau des irrégularités de surface provoquées par ces clapets. Il est en effet nécessaire de simplifier autant que possible cette tâche fastidieuse pour que les chauffeurs n'hésitent pas à garder la citerne en parfait état de propreté afin de livrer des produits purs et sans mélange.

Il est également souhaitable de pouvoir accéder à l'intérieur de l'unité de déchargement en vue de vérifier que la citerne a été complètement vidée préalablement à l'ouverture de la trappe.

Par ailleurs, il est bien entendu intéressant de pouvoir utiliser une telle citerne indifféremment pour des produits de granulométries différentes. Toutefois, les conditions d'écoulement dépendent de la nature des produits et en particulier de leur granulométrie. L'état de surface intérieur d'un cône d'écoulement devrait donc être adapté au matériau transporté de manière à assurer un déchargement convenable et rapide. On est donc amené à prévoir le démontage et le remontage de ces cônes.

Un tel démontage est en outre utile pour faciliter l'accessibilité de la citerne et son entretien. Il est en particulier important d'éliminer les zones de rétention de façon à interdire les mélanges de produits.

Par ailleurs, ces opérations doivent pouvoir être effectuées par un nombre de personnes restreint. En particulier, dans le cas d'un véhicule routier, il serait souhaitable que le chauffeur puisse effectuer à lui seul ces opérations.

Mais la maintenance des dispositifs connus de déchargement est généralement relativement complexe et ne peut être effectuée par une personne seule. Une maintenance simple est en effet associée pour des questions d'accessibilité à un cône de grandes dimensions, ce qui est incompatible avec une interchangeabilité aisée, notamment par une personne seule.

La présente invention vise à pallier ces inconvénients.

Plus particulièrement, l'invention a notamment pour but de fournir une unité de déchargement du type précité dont la surveillance et l'entretien soient simplifiés.

L'invention a également pour but de fournir une telle unité de déchargement dont le cône d'écoulement peut être rapidement et facilement échangé par une personne seule pour l'adapter au matériau transporté.

A cet effet l'invention a pour objet une unité de déchargement de citerne mobile pour produits pulvérulents ou granulaires, du type comprenant une trappe d'écoulement en forme de cône renversé dont la base est raccordée à un orifice dans l'enveloppe de la citerne et le sommet est raccordé à un conduit de vidange, et comprenant un clapet diffuseur d'air pressurisé, caractérisée par le fait que ledit clapet diffuseur est monté mobile dans un orifice de ladite trappe.

Le fait que le clapet soit mobile permet de l'extraire temporairement de son orifice de fonctionnement pour procéder à son nettoyage. Ce faisant, on donne en outre accès à l'intérieur de l'unité de déchargement pour son entretien et son inspection.

Dans un mode de réalisation particulier, ledit clapet diffuseur est monté sur un bras pivotant autour d'un axe solidaire de ladite trappe.

Avantageusement, l'axe dudit clapet est incliné vers l'aval par rapport à la normale à la surface de ladite trappe, en vue d'améliorer son efficacité.

Plus particulièrement, ledit orifice peut être disposé sensiblement dans l'axe dudit conduit de vidange, ce qui permet d'accéder à ce dernier en retirant le clapet.

Egalement dans un mode de réalisation particulier, ladite trappe est montée mobile par rapport à ladite enveloppe d'une position d'utilisation à une position de maintenance, ladite trappe étant munie de moyens pour la réception et le raccordement d'un cône d'écoulement lorsqu'elle est en position de maintenance et de moyens de verrouillage dans ladite position d'utilisation.

Le cône d'écoulement peut donc être ici considéré comme une simple "cartouche" adaptée et amovible dont on garnit une trappe d'accès en fonction du matériau transporté. Ce cône, qui n'a donc plus que la fonction d'optimiser les conditions d'écoulement mais plus celle de former la structure assurant la fermeture de l'orifice de déchargement, peut être léger bien que de grandes dimensions.

Les moyens de réception et de raccordement ainsi que les moyens de verrouillage peuvent être réalisés de manière à permettre une interchangeabilité aisée des différents cônes d'écoulement. En particulier, les fonctions de raccordement et les questions d'étanchéité qui leurs sont liées sont dissociées des fonctions de fermeture et de verrouillage. Ces dernières peuvent donc être conçues essentiellement en vue d'une rapidité et d'une facilité de mise en oeuvre.

Avantageusement, ladite trappe est raccordée à un conduit d'entrée d'air agencé pour amener de l'air pressurisé dans un volume compris entre la trappe et le cône d'écoulement lorsque ce dernier est en place dans la trappe.

On verra ci-après l'utilité d'un tel agencement en combinaison avec certains types de cônes d'écoulement.

L'invention sera bien comprise à la lecture de la description qui va suivre, donnée en référence aux dessins schématiques annexés.

La figure 1 est une vue de côté d'une remorque routière sur laquelle est montée une citerne munie d'une unité de déchargement selon l'invention.

La figure 2 est une vue en coupe axiale, à plus grande échelle, de cette unité de déchargement.

La figure 3 est également une vue en coupe axiale de ce dispositif en position ouverte.

La figure 4 est une vue en coupe axiale à encore plus grande échelle représentant un des cônes d'écoulement pouvant être utilisé dans le cadre d'une unité de déchargement selon l'invention (avec son axe en position verticale).

La figure 5 est une vue à plus grande échelle du détail V de la figure 4.

La figure 6 est une demi-vue en élévation (selon son axe) de l'organe de raidissement du cône d'écoulement représenté à la figure 4.

La figure 7 est une vue à plus grande échelle du détail VII de la figure 6, incluant une vue en coupe selon la ligne AA de cette même figure 7.

La figure 8 est une vue similaire à la figure 4 de l'ensemble de la zone d'écoulement de l'unité de déchargement.

Les figures 9a et 9b représentent en coupe un dispositif de verrouillage pour cette unité, respectivement en positions déverrouillée et verrouillée.

La figure 10 est une vue détaillée en coupe axiale de la partie inférieure de la zone d'écoulement représentée à la figure 8.

La figure 11 est une vue en section axiale éclatée d'une unité selon l'invention dans une variante d'utilisation.

La figure 12 est une vue dirigée vers l'arrière en coupe axiale d'une des unités des figures précédentes équipée d'un autre cône d'écoulement.

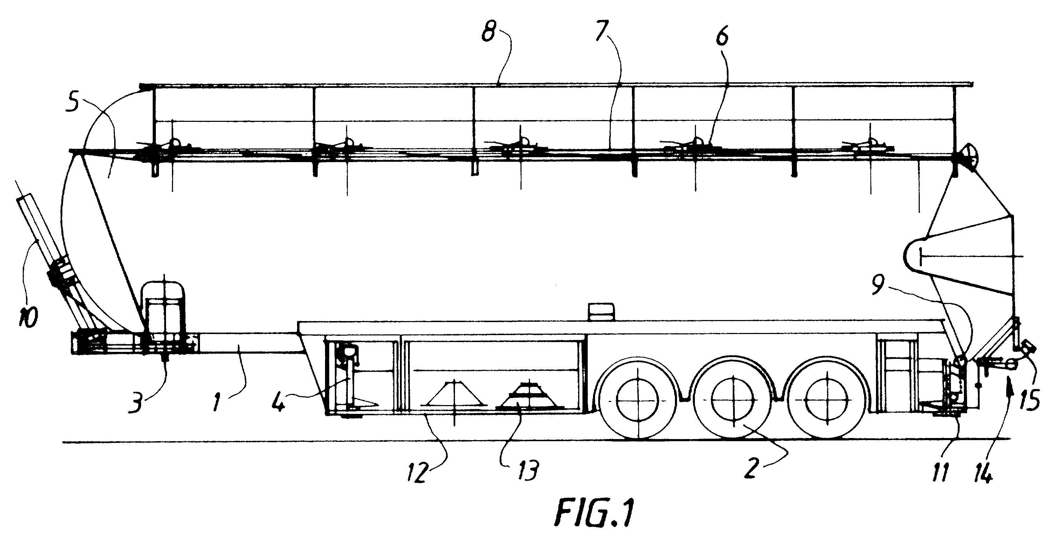

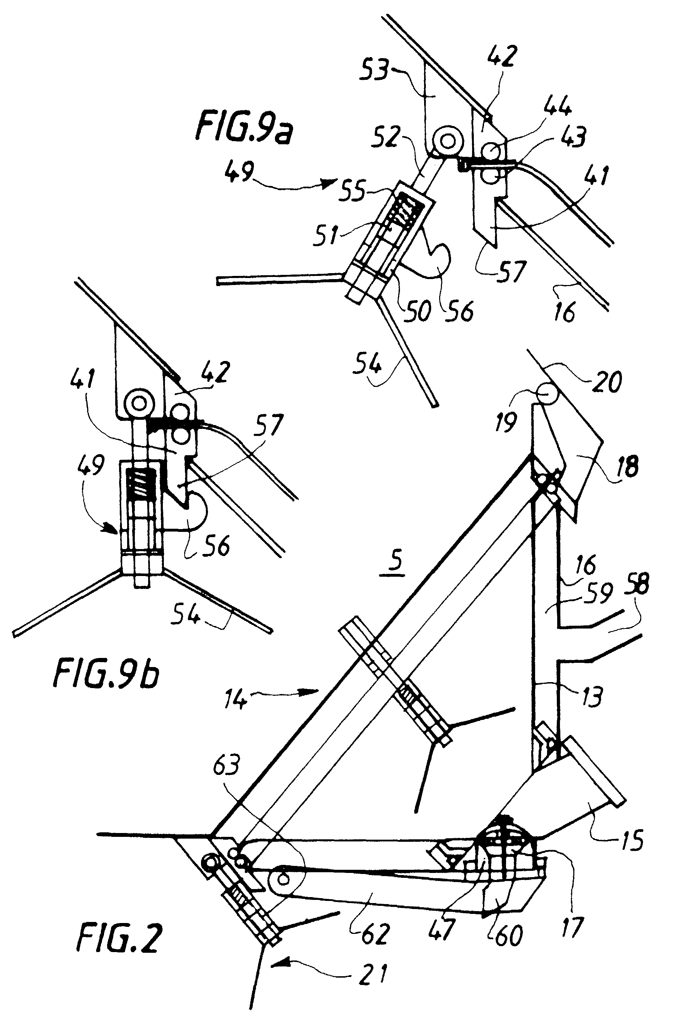

La remorque de la figure 1, destinée à être attelée à un tracteur routier, comporte de façon connue un châssis 1 supporté par des roues 2 réparties ici sur trois essieux. Un dispositif d'attelage 3 au tracteur et une béquille de stationnement 4 sont montés sous le châssis 1.

Le châssis 1 porte par ailleurs une citerne 5 destinée au transport de produits pulvérulents tels que du ciment, ou granulaires tels que des céréales. La partie supérieure de la citerne est munie de trappes d'accès et de remplissage 6. D'autre part, elle supporte une passerelle de service 7 et une rampe de sécurité escamotable 8 pour le personnel utilisateur.

La citerne 5 est montée sur le châssis 1 basculante à sa partie arrière autour d'un axe horizontal 9 perpendiculaire au plan de symétrie de la remorque. Le basculement de la citerne s'effectue à l'aide d'un vérin 10 monté entre les parties avant du châssis 1 et de la citerne 5. Des béquilles 11 montées sur des vérins, sous et à l'arrière du châssis 1, permettent d'assurer la stabilité de la remorque lors du basculement de la citerne 5.

Le châssis reçoit également une structure 12 comportant un plancher sur lequel peuvent être déposés et stockés différents cônes d'écoulement 13 du type de ceux qui seront décrits ci-après. Un panneau formant cache, non représenté, peut être monté sur le châssis 1 par l'intermédiaire de vérins de manière à protéger les cônes stockés durant les trajets de la remorque.

A sa partie arrière inférieure, la citerne 5 comporte une unité de déchargement 14 de forme généralement conique inversée, ici à section circulaire, dont la section de base est raccordée à un orifice de l'enveloppe de la citerne 5 et dont le sommet est raccordé à un conduit de vidange 15 qui, dans le cas présent, se trouve dans le plan de symétrie de la remorque.

Dans la position où la citerne 5 est représenté à la figure 1, c'est-à-dire dans sa position de transport ou de stationnement où son axe est sensiblement horizontal, l'axe de l'unité de déchargement conique 14 est incliné par rapport à la verticale. Cet axe est amené en position sensiblement verticale lorsque la citerne est basculée autour de l'axe 9 en position de déchargement.

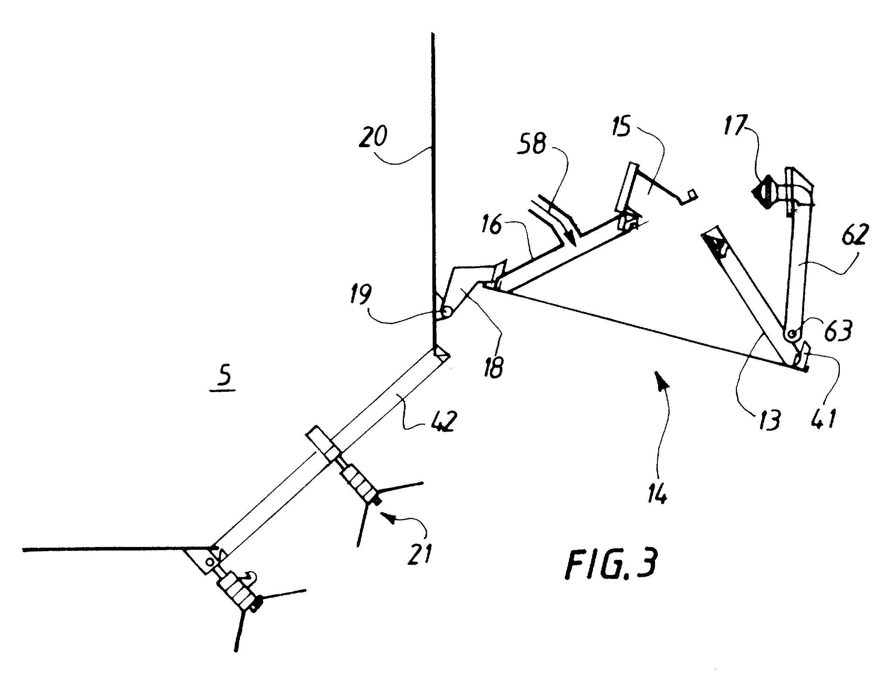

Si l'on se réfère maintenant aux figures 2 et 3, on peut voir plus en détail l'unité de déchargement 14.

Cette dernière se compose pour l'essentiel d'une trappe tronconique 16, dont sont solidaires le conduit de vidange 15 précité raccordé au sommet de la trappe 16, et un clapet mobile diffuseur d'air 17 de tout type convenable, un cône d'écoulement 13a du type des cônes 13 déjà mentionnés étant reçu dans la trappe 16. La trappe 16 est également solidaire pour son mouvement d'une ferrure 18 articulée autour d'un axe 19 sur l'enveloppe 20 de la citerne 5.

Ainsi, l'unité de déchargement peut passer d'une position ouverte de maintenance représentée à la figure 3 à une position d'utilisation représentée à la figure 2. Des moyens de verrouillage 21 décrits en détail ci-après permettent de verrouiller l'unité de déchargement dans sa position d'utilisation de la figure 2.

La position de maintenance est celle qui est adoptée lorsque la citerne est vide et que l'on souhaite procéder à son nettoyage ou au changement du cône d'écoulement 13. La position d'utilisation est celle qui est adoptée en toutes circonstances lorsque la citerne est pleine, notamment pour son transport et son déchargement ainsi que, comme on le verra ci-après, lorsque l'on souhaite vérifier l'état de propreté du clapet diffuseur 17 ou s'assurer que la citerne est vide

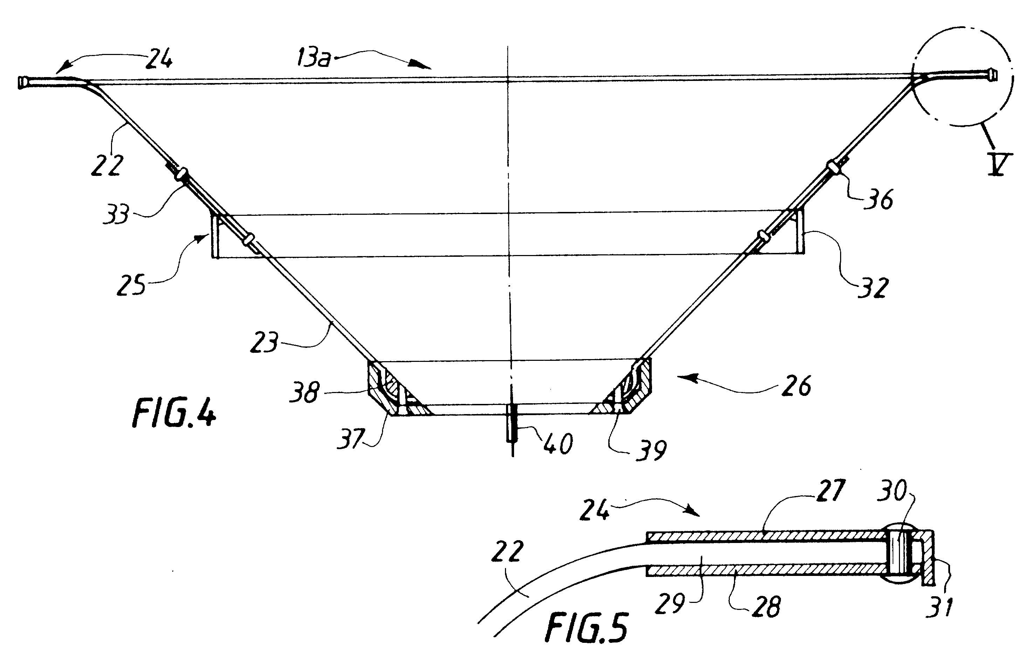

Le cône d'écoulement 13a représenté à la figure 4 est plus particulièrement destiné au déchargement des produits pulvérulents. Son demi-angle au sommet est dans le cas présent d'environ 45°.

Ce cône d'écoulement 13a comprend d'une manière générale deux parties tronconiques 22 et 23 réalisées d'une seule pièce en toile perméable à l'air destinée à fluidifier le produit en cours de déchargement, une rive annulaire 24 pour le raccordement amont du grand tronc de cône 22 dans le plan de l'orifice de l'enveloppe de la citerne, un organe de raidissement 25 à la jonction entre le grand tronc de cône 22 et le petit tronc de cône 23, et un ensemble 26 de montage et de raccordement aval du cône d'écoulement au conduit de vidange 15. La petite base du tronc de cône 22 correspond à la grande base du tronc de cône 23 au niveau de l'organe de raidissement 25.

La rive annulaire 24 est composée de deux anneaux plans 27 et 28 respectivement supérieur et inférieur, réalisés en matériau relativement rigide susceptible de fournir une étanchéité à l'air au contact des brides de fixation qui seront décrites ci-après. Les deux anneaux d'étanchéité enserrent la zone marginale annulaire supérieure 29 du tronc de cône en toile 22, et des rivets 30 traversant les anneaux et la toile assurent le maintien de l'ensemble.

Enfin, un rebord cylindrique 31 fait saillie vers le bas à partir du bord extérieur de l'anneau supérieur 27 pour recouvrir le bord extérieur de l'anneau inférieur 28, au contact de ce dernier. Le rebord 31 fait office de joint d'étanchéité pour empêcher un flux d'air vers l'extérieur dans l'épaisseur de la zone marginale perméable 29

L'organe de raidissement 25 est composé d'une virole cylindrique 32 coaxiale au cône d'écoulement et supportant un certain nombre de pattes de liaison en tôle plane 33 qui sont ici au nombre de douze. Les pattes 33 sont découpées en forme oblongue et sont soudées à la virole de façon régulièrement espacées par deux cordons de soudure 34 et 35. Les pattes 33 font avec l'axe de la virole 32 un angle de 45° de sorte qu'elles reposent localement dans le plan tangent à ce cône.

La portion du cône d'écoulement en toile correspondant aux zones marginales inférieure du tronc de cône 22 et supérieure du tronc de cône 23 se trouve au niveau de l'organe de raidissement 25. Cette portion est fixées aux pattes 33 par des rivets 36.

L'ensemble de montage 26 comprend une bride extérieure 37 et une bride intérieure 38 enserrant la zone marginale inférieure du tronc de cône 23. La liaison des brides 37 et 38 et de la toile pincée entre ces dernières est assurée par des vis 39 traversant la bride extérieure 37 et vissées dans la bride intérieure 38.

La bride extérieure 37 est réalisée en forme de coupelle à fond découpé circulairement. La bride intérieure 38 possède la forme d'un anneau. Les formes intérieures des brides 37 et 38 sont coniques de révolution de manière à assurer le prolongement de la surface du cône d'écoulement sans que soient formées d'irrégularités susceptibles de nuire à l'écoulement régulier du produit à décharger.

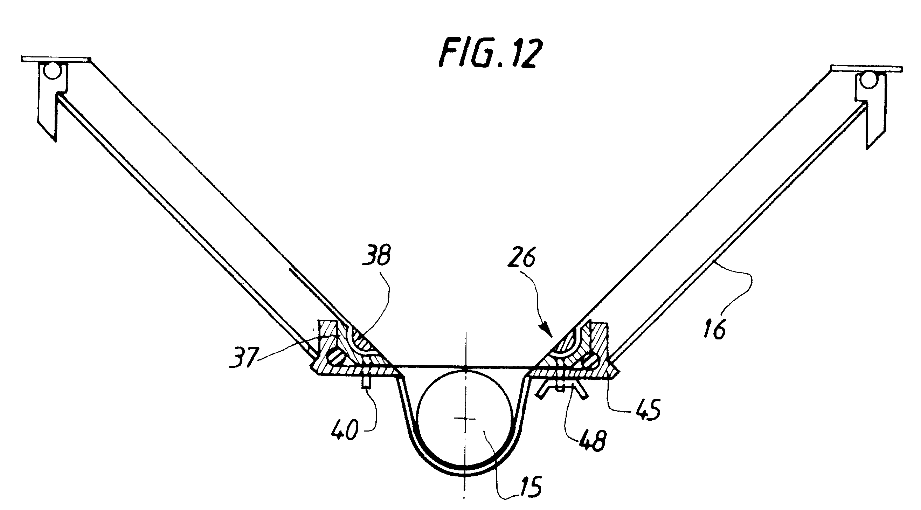

Par ailleurs, la bride extérieure 37 reçoit deux goujons filetés 40 en saillie vers le bas et diamétralement opposés de part et d'autre du plan de symétrie de la remorque. On verra ci-après en référence à la figure 12 comment ces goujons 40 permettent la fixation inférieure du cône d'écoulement 13a.

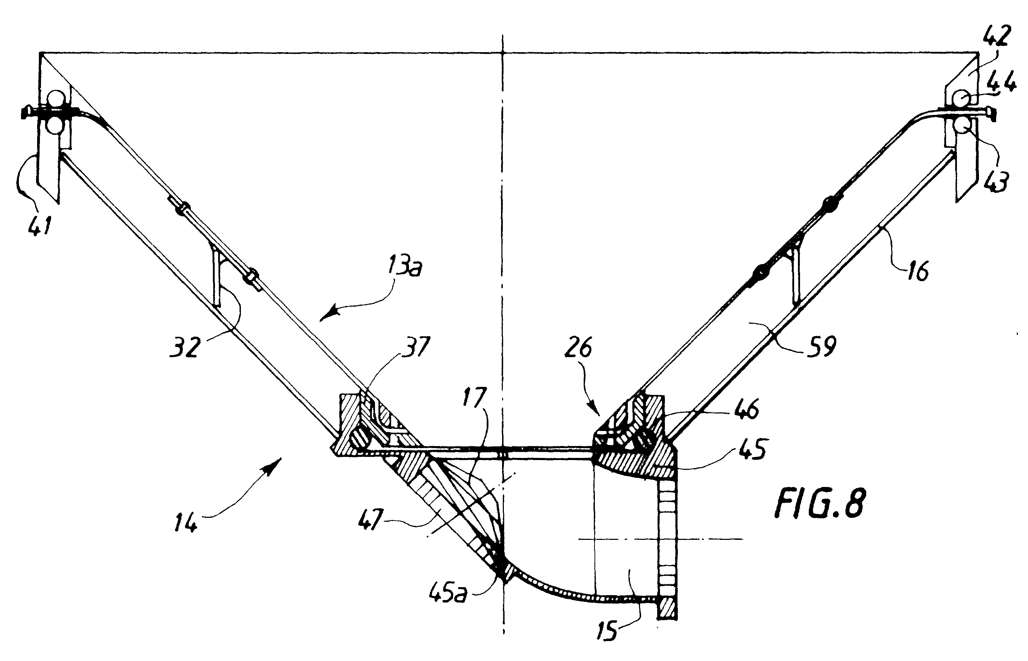

On décrira maintenant l'agencement de l'unité de déchargement 14 en référence à la figure 8.

La trappe tronconique 16 est pourvue à sa périphérie d'une bride 41 mobile avec elle. De même, une bride fixe 42 en vis-à-vis de la bride 41 forme la bordure de l'orifice dans l'enveloppe 20 de la citerne 5 qui est fermé par la trappe 16. Deux joints toriques d'étanchéité 43 et 44 sont encastrés dans des rainures adéquates se faisant face, formées à la surface des brides 41 et 42 respectivement.

La trappe conique 16 porte à son sommet, à sa partie inférieure, une ferrure annulaire 45 de forme similaire à celle de la bride extérieure 37, de manière à former à son intérieur un logement de réception de cette dernière, un joint d'étanchéité 46 étant interposé. Par ailleurs, la ferrure 45 comporte deux trous susceptibles de recevoir les deux goujons 40, comme montré à la figure 12.

A l'opposé du logement de réception de la bride 37, c'est-à-dire au bas de l'unité de déchargement 14 en aval du cône d'écoulement 13, la ferrure 45 porte une pièce 45a qui, d'une part, forme le début du conduit de vidange 15 et, d'autre part, comporte dans l'axe de ce conduit 15 un orifice 47 dans lequel peut être logé le clapet diffuseur d'air 17 précité.

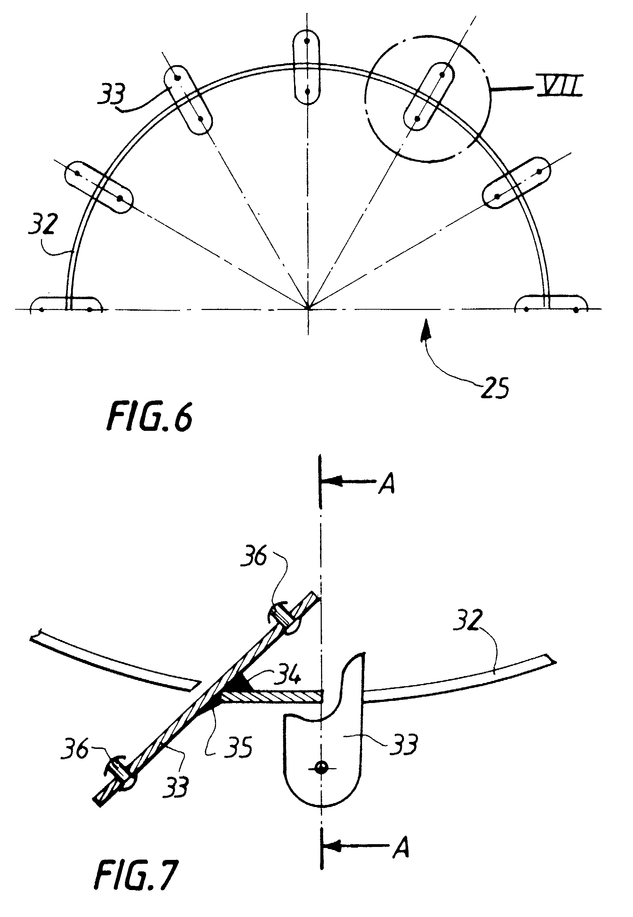

L'installation d'un cône d'écoulement 13 tel que le cône 13a qui vient d'être décrit en référence aux figures 4 à 7, s'effectue de la manière qui va maintenant être décrite. On observera que divers types de cônes sont interchangeables. C'est ainsi que, outre le cône 13a, on prévoit avantageusement pour les produits granulaires un cône en tôle lisse, comme représenté à la figure 12, possédant ou non à sa surface des diffuseurs d'air de type connu. L'essentiel est que ces cônes possèdent une rive annulaire supérieure 24 et un ensemble inférieur de montage 26 compatibles avec les dispositifs analogues fixes de la citerne.

La trappe 16 étant ouverte, un cône d'écoulement 13 adapté au matériau qui va être chargé y est introduit jusqu'à ce que sa bride extérieure 37 vienne s'engager dans le logement correspondant de la ferrure 45, avec ses goujons 40 engagés dans leur trou respectif de cette ferrure. L'anneau d'étanchéité 28 est alors en contact avec le joint torique correspondant 43 de la bride mobile 41. Dans le cas du cône d'écoulement 13a, le bord inférieur de la virole 32 vient en appui contre la surface intérieure de la trappe 16, empêchant un affaissement de la toile fluidifiante en direction de cette surface.

Des moyens de fixation tels que des écrous papillons 48 (figure 12) sont vissés sur les goujons 40, immobilisant l'ensemble de montage 26, et par conséquent le cône d'écoulement du fait de l'appui des éléments d'étanchéité 28 et 43. La trappe peut alors être rabattue dans sa position fermée. Le montage du cône d'écoulement dans la trappe peut donc être réalisé facilement par un seul opérateur.

Dans ce mouvement de rabattement, l'anneau d'étanchéité 27 vient au contact du joint torique 44 de la bride fixe 42. Les moyens de verrouillage 21 étant actionnés, l'intérieur du cône d'écoulement 13, et donc l'intérieur de la citerne 5, est isolé par ce cône de l'espace compris entre la trappe et le cône. Par conséquent, dans le cas d'un cône en tôle, aucun flux d'air n'est possible entre ces deux volumes. Dans le cas du cône en toile 13a, seul un flux d'air au travers de cette toile est possible.

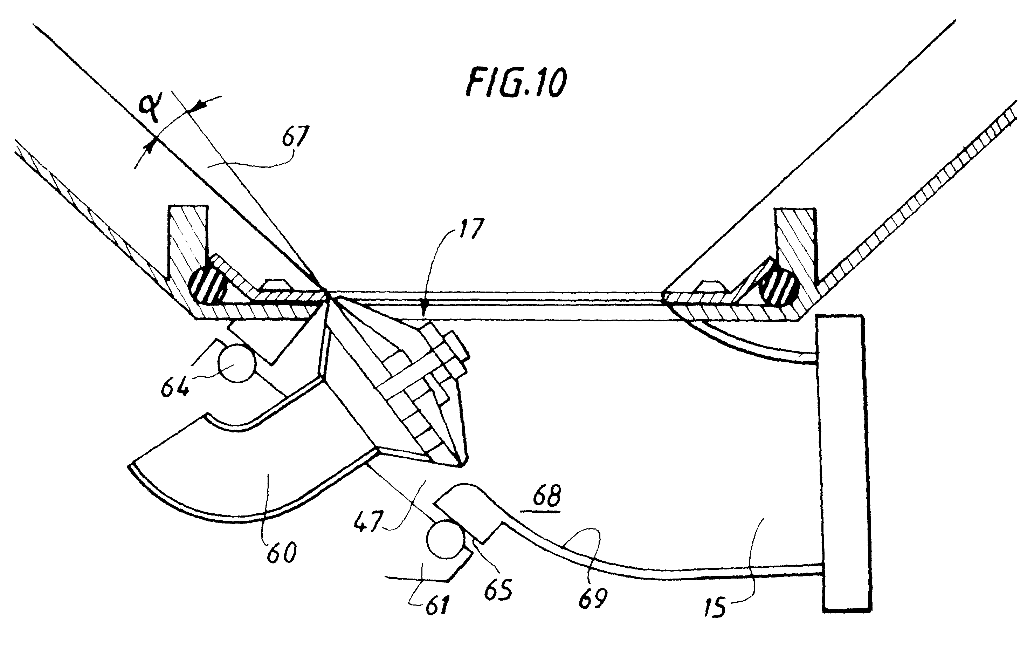

Un des ensembles des moyens de verrouillage 21 est représenté en détail aux figures 9.

Un tel ensemble comprend un vérin à vis 49 comportant un corps 50 dans lequel un écrou 51 est bloqué en translation mais laissé libre en rotation. Cet écrou est vissé sur une tige filetée 52 qui traverse le fond du corps 50 de façon non rotative et est articulée sur une ferrure 53 solidaire de la bride fixe 42 à la périphérie de l'orifice dans l'enveloppe de la citerne. L'écrou 51 peut être manoeuvré par une poignée 54.

Par ailleurs, un ressort hélicoïdal de compression 55 est disposé autour de la tige 52 entre l'écrou 51 et le fond du corps 50. Un crochet 56 est solidaire du corps 50 à l'extérieur de ce dernier et peut coopérer avec un rebord 57 en forme de came de la bride mobile 41.

Lors du verrouillage, le corps 51 et le crochet 56 sont tout d'abord écartés de la ferrure 53 par rotation de la poignée dans un certain sens, jusqu'à ce que le crochet puisse s'engager derrière le rebord 57, comme montré à la figure 9a. La forme de came de ce dernier facilite cet engagement par compression du ressort 55. La poignée 54 est ensuite tournée en sens inverse pour plaquer la bride mobile 41 contre la bride fixe 42 et assurer ainsi l'étanchéité, comme montré à la figure 9b. Le verrouillage et le déverrouillage de l'unité de déchargement ne présentent donc aucune difficulté.

On décrira à présent les moyens pneumatiques mis en oeuvre dans l'unité de déchargement 14.

En premier lieu, un premier conduit d'air pressurisé 58 (non représenté à la figure 8) est connecté à la trappe 16 de sorte que son flux débouche dans l'espace 59 compris entre cette trappe et le cône d'écoulement 13. On a vu précédemment que cet espace est pneumatiquement isolé de sorte que de l'air ne peut être envoyé par le conduit 58 que lors de l'utilisation du cône 13a. Cet air traverse alors la toile du cône, assurant la fluidification du matériau pulvérulent en cours de déchargement en l'empêchant d'adhérer à la surface du cône et de former une voûte bloquant l'écoulement.

Un autre conduit d'air pressurisé 60 est relié au clapet diffuseur 17. Le conduit 60 comporte au moins une partie souple, le clapet étant mobile. A cet effet, le clapet 17 est monté sur une ferrure 61 (figure 10) portée à l'extrémité d'un bras 62 (figures 2 et3) articulé autour d'un axe 63 porté par la trappe 16.

La ferrure 61 comporte un rainure dans laquelle est engagé un joint torique d'étanchéité 64 agencé pour coopérer avec une surface d'étanchéité 65 formée à la périphérie de l'orifice 47. Des moyens convenables non représentés sont prévus pour verrouiller le bras dans la position où la ferrure 61 et le clapet 17 ferment cet orifice 47. Il est donc possible d'accéder aisément, au moins visuellement, à l'intérieur de l'unité de déchargement 14 sans ouvrir la trappe 16, en particulier pour s'assurer que la citerne est vide ou pour déboucher éventuellement le conduit de vidange 15.

On voit à la figure 10 que l'axe du clapet 17 est incliné vers le bas d'un faible angle α, par exemple de l'ordre de 2°, par rapport à la normale à la surface du cône d'écoulement. Ainsi, dans la zone 67 située au-dessus du clapet 17, l'air injecté érode le produit en cours de déchargement et provoque son écroulement, limitant en conséquence les risques de formation d'une voûte. Dans la zone 68 située au-dessous du clapet 17, le jet d'air est tangent à la surface 69 de l'entrée du conduit 15, assurant l'accélération du produit en cours de déchargement vers le conduit de vidange.

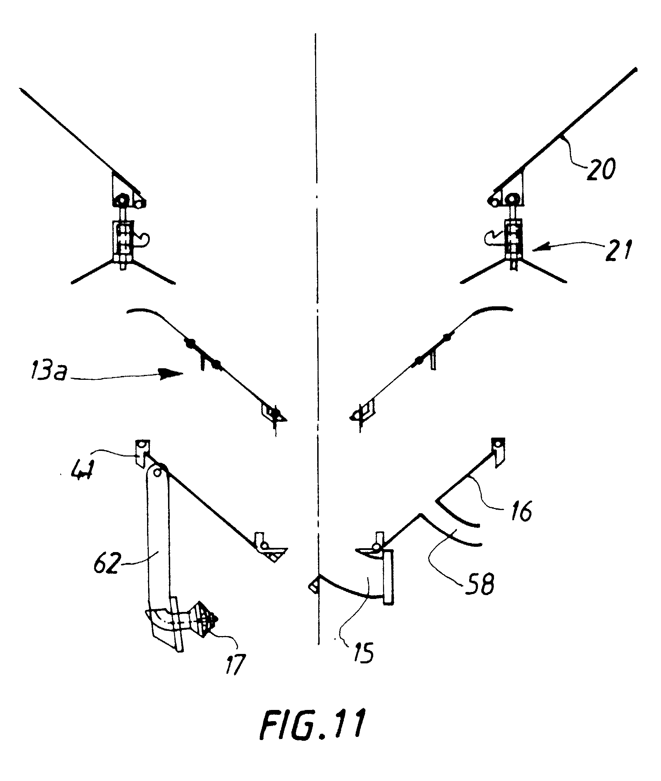

Le mode de réalisation de la figure 11 ne diffère pas de celui des figures précédentes par sa constitution, mais par son domaine d'utilisation. En effet, l'unité de déchargement selon l'invention n'est pas incorporée à la partie arrière d'une citerne basculante mais à la partie inférieure d'une citerne horizontale de type connu. Dans ce cas, par conséquent, l'axe de cette unité est toujours vertical. On peut, plus particulièrement dans ce cas, ne pas monter la trappe 16 pivotante par rapport à la citerne, mais totalement amovible.

On observera que certaines des caractéristiques du dispositif décrit ci-dessus peuvent être utilisées indépendamment de certaines autres. En particulier, l'interchangeabilité des cônes d'écoulement peut dans certains cas être dissociée du caractère mobile du clapet diffuseur d'air.

## Revendications

1. Unité de déchargement de citerne mobile pour produits pulvérulents ou granulaires, du type comprenant une trappe d'écoulement (16) en forme de cône renversé dont la base est raccordée à un orifice dans l'enveloppe (20) de la citerne (5) et le sommet est raccordé à un conduit de vidange (15), et comprenant un clapet diffuseur d'air pressurisé (17), caractérisée par le fait que ledit clapet diffuseur (17) est monté mobile dans un orifice (47) de ladite trappe.

2. Unité de déchargement selon la revendication 1, caractérisée par le fait que ledit clapet diffuseur (17) est monté sur un bras (62) pivotant autour d'un axe (63) solidaire de ladite trappe (16).

3. Unité de déchargement selon l'une quelconque des revendications 1 et 2, caractérisée par le fait que l'axe dudit clapet (17) est incliné vers l'aval par rapport à la normale à la surface de ladite trappe.

4. Unité de déchargement selon l'une quelconque des revendications 1 à 3, caractérisée par le fait que ledit orifice (47) est disposé sensiblement dans l'axe dudit conduit de vidange (15).

5. Unité de déchargement selon l'une quelconque des revendications 1 à 4, caractérisée par le fait que ladite trappe (16) est montée mobile par rapport à ladite enveloppe d'une position d'utilisation à une position de maintenance, ladite trappe étant munie de moyens (41, 45) pour la réception et le raccordement d'un cône d'écoulement (13a) lorsqu'elle est en position de maintenance et de moyens (41) de verrouillage dans ladite position d'utilisation.

6. Unité de déchargement selon la revendication 5, caractérisée par le fait que lesdits moyens de réception et de raccordement comprennent une bride de pincement mobile (41) agencée pour coopérer avec une bride de pincement fixe (42) montée à la périphérie dudit orifice, pour pincer une rive annulaire (24) de raccordement amont du cône d'écoulement.

7. Unité de déchargement selon l'une quelconque des revendications 5 et 6, caractérisée par le fait que lesdits moyens de réception et de raccordement comprennent une ferrure (45) formant un logement de réception pour un ensemble (26) de raccordement aval du cône d'écoulement, et comportant des moyens de fixation pour ledit ensemble.

8. Unité de déchargement selon l'une quelconque des revendications 5 à 7, caractérisée par le fait que lesdits moyens de verrouillage comprennent un rebord (57) d'un organe de verrouillage (41) agencé pour coopérer avec des crochets (56) montés à la périphérie dudit orifice de l'enveloppe (20) de la citerne (5).

9. Unité de déchargement selon la revendication 8, caractérisée par le fait que ledit rebord (57) possède une forme de came pour coopérer avec ledit crochet (56) contre l'action de moyens élastiques (55).

10. Unité de déchargement selon l'une quelconque des revendications 5 à 9, caractérisée par le fait que ladite trappe est raccordée à un conduit (58) d'entrée d'air agencé pour amener de l'air pressurisé dans un volume (59) compris entre la trappe et le cône d'écoulement lorsque ce dernier est en place dans la trappe.
